# EUROPÄISCHE PATENTSCHRIFT

(11) **EP 3 629 877 B1**
(45) Veröffentlichungstag und Bekanntmachung des Hinweises auf die Patenterteilung: **07.07.2021**
(21) Anmeldenummer: 18725234.1
(22) Anmeldetag: 18.05.2018
(51) Int. Cl.: A47L 15/42, D06F 39/00

(54) **GESCHIRRSPÜLMASCHINE, INSBESONDERE HAUSHALTSGESCHIRRSPÜLMASCHINE**
DISHWASHER, IN PARTICULAR DOMESTIC DISHWASHER
LAVE-VAISSELLE, EN PARTICULIER LAVE-VAISSELLE ÉLECTROMÉNAGER

(30) Priorität: 23.05.2017 DE 102017111187
(43) Veröffentlichungstag der Anmeldung: 08.04.2020
(73) Patentinhaber: Miele & Cie. KG, 33332 Gütersloh (DE)
(72) Erfinder: BERTRAM, Andre, 33609 Bielefeld (DE); DAHMS, Tobias, 30519 Hannover (DE); STEINMEIER, Ralph, 32052 Herford (DE); NIERLING, Andreas, 49326 Melle (DE); SCHRÖDER, Nils, 33611 Bielefeld (DE)
(86) Internationale Anmeldenummer: PCT/EP2018/063054
(87) Internationale Veröffentlichungsnummer: WO 2018/215331

(56) Entgegenhaltungen:
- EP-A1- 3 141 176
- EP-A2- 1 864 603
- EP-A2- 2 193 741
- EP-A2- 2 578 133
- CH-A2- 699 692
- CN-A- 103 976 702
- DE-A1-102014 104 369
- DE-A1-102015 203 532

## Beschreibung

Die Erfindung betrifft eine Geschirrspülmaschine, insbesondere eine Haushaltsgeschirrspülmaschine, mit einem einen Spülraum bereitstellenden Spülbehälter, der der Aufnahme von zu reinigendem Spülgut dient, und einer Wärmepumpeneinrichtung, die einen Verdampfer aufweist, der innerhalb eines mit Wasser befüllten Tanks angeordnet ist. Ferner betrifft die Erfindung ein Verfahren zum Betrieb einer Geschirrspülmaschine.

Geschirrspülmaschinen der eingangs genannten Art sind aus dem Stand der Technik an sich wohl bekannt. Eines gesonderten druckschriftlichen Nachweises bedarf es an dieser Stelle deshalb nicht, weshalb auch nur exemplarisch auf die EP 3 141 176 A1 verwiesen werden soll, die eine gattungsgemäße Geschirrspülmaschine betrifft.

Vorbekannte Geschirrspülmaschinen verfügen über einen Spülbehälter, auch Bottich genannt, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dergleichen handeln kann.

Zur Beaufschlagung von zu reinigendem Spülgut mit Spülflüssigkeit, der sog. Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe verworfen und abgepumpt.

Geschirrspülmaschinen der eingangs genannten Art können bekanntermaßen mit einer Wärmepumpeneinrichtung ausgestattet sein, um den Energieverbrauch insbesondere bei einem Aufheizen der Spülflotte zu reduzieren, insbesondere deshalb, weil ein solches Aufheizen der Spülflotte den größten Teil am Energieverbrauch einer Geschirrspülmaschine ausmacht.

Aus der EP 2 682 038 A2 ist eine Geschirrspülmaschine mit einer Luft-Wasser-Wärmepumpeneinrichtung bekannt. Im Betriebsfall entzieht die Wärmepumpeneinrichtung der Umgebungsatmosphäre, das heißt der die Geschirrspülmaschine umgebenden Luft Wärmeenergie, um diese auf die im Inneren der Geschirrspülmaschine umgewälzte Spülflotte zu übertragen. Die Wärmepumpeneinrichtung verfügt zu diesem Zweck in an sich bekannter Weise über einen Verdampfer, einen Verdichter, einen Verflüssiger und einen diese Komponenten miteinander strömungstechnisch verbindenden Strömungs- oder Umwälzkreislauf. Dabei dient der Verflüssiger als Wärmetauscher, mittels dem Wärmeenergie von einem im Strömungskreislauf der Wärmepumpeneinrichtung umgewälzten Arbeitsmedium auf die Spülflotte übertragen wird.

Im bestimmungsgemäßen Verwendungsfall der Wärmepumpeneinrichtung wird zwecks Aufheizung der Spülflotte mittels Ventilatoren Raumluft angesaugt und über den Verdampfer der Wärmepumpeneinrichtung geleitet. Dies führt zu einer Abkühlung der zugeführten Raumluft, wobei die der Raumluft entzogene Wärmeenergie auf das Arbeitsmedium übertragen wird, das infolge dessen im Verdampfer verdampft. Das daraufhin in gasförmiger Form vorliegende Arbeitsmedium wird anschließend in dem Verdichter komprimiert und so auf ein höheres Temperaturniveau gebracht. Schließlich erfolgt eine Einleitung des gasförmigen Arbeitsmediums in den Verflüssiger, wo unter Energiefreigabe eine Verflüssigung des Arbeitsmediums stattfindet. Die dabei frei werdende Wärmeenergie dient der Spülflottenaufheizung.

Aus dem Stand der Technik ist gleichfalls der Einsatz von Wasser-Wasser-Wärmepumpeneinrichtungen bekannt, so zum Beispiel aus der EP 2 206 824 A2 und der schon eingangs genannten EP 3 141 176 A1. Im bestimmungsgemäßen Verwendungsfall wird mit einer solchen Wärmepumpeneinrichtung nicht der Umgebungsatmosphäre, sondern einem Flüssigkeitsreservoir Wärmeenergie entzogen. Die EP 2 206 824 A2 sieht zu diesem Zweck einen geschlossenen Wassertank vor, der den Verdampfer der Wärmepumpeneinrichtung beherbergt. Im Betriebsfall kommt es infolge eines Wärmeenergieentzugs zu einer Abkühlung des im Tank bevorrateten Wassers. Dabei kann eine Abkühlung des Wassers bis zur Vereisung vorgenommen werden. Die EP 3 141 176 A1 offenbart gleichfalls eine Wasser-Wasser-Wärmepumpeneinrichtung, allerdings im Unterschied zur EP 2 206 824 A2 eine solche mit einem offen ausgebildeten Wassertank.

Die DE 10 2015 203532 A1 offenbart eine Geschirrspülmaschine mit einem einen Spülraum bereitstellenden Spülbehälter, der der Aufnahme von zu reinigendem Spülgut dient, und einer Wärmepumpeneinrichtung die einen Verdampfer aufweist, der innerhalb eines mit Wasser befüllten Tanks angeordnet ist, wobei der Tank strömungstechnisch an den Spülbehälter und an eine Frischwassereinlaufeinrichtung angeschlossen ist. Der Tank ist dabei seitlich des Spülbehälters unter Zwischenordnung eines Isolationsmaterialsystems angeordnet.

Ein Wiedereinsatz der Geschirrspülmaschine nach Abschluss eines vorangegangenen Spülprogramms ist unter Verwendung der Wärmepumpeneinrichtung erst dann wieder möglich, wenn das im Wassertank der Wärmepumpeneinrichtung vereiste Wasser wieder aufgetaut ist. Denn ein bestimmungsgemäßer Einsatz der Geschirrspülmaschine unter gleichzeitiger Nutzung der Wärmepumpeneinrichtung ist energetisch nur dann sinnvoll, wenn das im Wassertank bevorratete Wasser eine gewisse Mindesttemperatur aufweist. Sollte das Wasser nach einer vorangegangenen Geschirrspülmaschinenbenutzung noch zu kühl oder sogar gefroren sein, muss mit einem bestimmungsgemäßen Einsatz der Geschirrspülmaschine bis zum Erreichen der Mindesttemperatur gewartet werden, was bei noch gefrorenem Wasser durchaus 24 Stunden in Anspruch nehmen kann. Eine bestimmungsgemäße Verwendung der Geschirrspülmaschine unter Einsatz der Wärmepumpeneinrichtung ist mithin pro Tag nur einmal möglich. Dies wird verwenderseitig als nachteilig empfunden.

Um diesem Problem zu begegnen, sind Konstruktionen vorgeschlagen worden, wonach der Tank dem Spülbehälter möglichst nahe nebengeordnet wird. Damit wird erreicht, dass die Wärmestrahlung, die von einem nach Abschluss eines bestimmungsgemäß durchlaufenen Spülprogramms noch aufgeheiztem Spülbehälter abgegeben wird, für ein schnelleres Auftauen von im Wassertank befindlichem Eis genutzt wird. Um eine Wärmerückführung in den Wassertank noch effektiver zu gestalten, ist mit der EP 2 193 741 A2 der Einsatz eines Kopplungstanks vorgeschlagen worden, der zwischen Wassertank und Spülbehälter angeordnet ist.

All den vorbeschriebenen Lösungen ist in nachteiliger Weise gemein, dass der Tank zwecks Bereitstellung eines Ausgleichsvolumens für das im Gefrierfall entstehende Eis nicht vollständig mit Wasser befüllt sein darf. Ansonsten käme es im Gefrierfall aufgrund des sich beim Einfrieren ausdehnenden Wassers zu einem Bersten des Wassertanks. Dabei ist aus Sicherheitsgründen das zwingenderweise vorzusehende Ausgleichsvolumen größer als im Anwendungsfall benötigt bemessen, insbesondere auch deshalb, weil es in aller Regel nicht zu einem Einfrieren des gesamten im Tank befindlichen Wassers kommt. Es ist deshalb stets ein Luftpolster gegeben, das sich im Tank oberhalb des Wasser- bzw. Eispegels befindet. Dieses Luftpolster wirkt in nachteiliger Weise thermisch isolierend, so dass vom Spülbehälter ausgehende Wärmestrahlung für ein Auftauen von sich im Wassertank befindlichem Eis nur unzureichend genutzt werden kann. Ein signifikant schnelleres Auftauen von im Wassertank befindlichem Eis kann damit auch durch eine Anordnung des Wassertanks nahe am Spülbehälter nicht erreicht werden.

Ausgehend vom Vorbeschriebenen ist es die **Aufgabe** der Erfindung, eine Geschirrspülmaschine der eingangs genannten Art vorzuschlagen, die konstruktionsbedingt ein schnelleres Auftauen von im Wassertank der Wärmepumpeneinrichtung befindlichem Wasser ermöglicht.

Zur **Lösung** dieser Aufgabe wird mit der Erfindung eine Geschirrspülmaschine und ein Verfahren zum Betrieb einer Geschirrspülmaschine mit den Merkmalen der unabhängigen Ansprüche vorgeschlagen.

In Abkehr zum Stand der Technik beispielsweise nach der EP 2 206 824 B1 und der EP 2 193 741 A2 ist der Tank der Wärmepumpeneinrichtung nicht geschlossen ausgebildet. Er ist vielmehr strömungstechnisch einerseits an den Spülbehälter und andererseits an eine Frischwassereinlaufeinrichtung angeschlossen. Dies gestattet es, im Tank befindliches Wasser im Bedarfsfall abzuführen, und zwar durch Einleitung in den Spülbehälter. Ferner ist die Zuführung von Frischwasser in den Tank gestattet, und zwar mittels der daran strömungstechnisch angeschlossenen Frischwassereinlaufeinrichtung.

Die strömungstechnische Ankopplung des Wassertanks an den Spülbehälter einerseits und die Frischwassereinlaufeinrichtung andererseits gestattet es, den Füllstand innerhalb des Tanks bedarfsgerecht einzustellen, und zwar vorzugsweise in Abhängigkeit eines Spülprogrammablaufs. Insbesondere ist es möglich, den Tank nach Beendigung eines Betriebs der Wärmepumpeneinrichtung vollständig zu füllen, d.h. den Wassertank bis zum Erreichen eines maximalen Füllstandes aufzufüllen, so dass die den Tank oberseitig verschließende beziehungsweise abschließende Deckenwandung auf ihrer Innenseite benetzt ist. Es ist so in vorteilhafter Weise die Ausbildung eines Luftpolsters oberhalb des Füllpegels vermieden. Vom Spülbehälter ausgehende Wärmestrahlung kann so maximiert vom Wassertank und dem darin bevorrateten Wasser absorbiert werden, was zu einem deutlich schnelleren Auftauen von im Tank befindlichem Eis führt.

Die erfindungsgemäße Konstruktion gestattet es, den Füllstand innerhalb des Wassertanks variabel zu halten. So lässt sich der Füllstand auf einen unteren Pegelstand einstellen und damit ein Luftpolster schaffen, wenn ein Wärmeübertrag vom Spülbehälter auf den Tank bzw. auf das darin befindliche Wasser weitestgehend vermieden werden soll, was beispielweise im Falle eines Wärmepumpenbetriebs der Fall ist, wenn es also darum geht, die Spülflotte und den Spülbehälter, nicht aber den Wassertank aufzuwärmen. Wenn indes nach Abschluss eines Betriebs der Wärmepumpeneinrichtung das im Tank befindliche Wasser gefroren ist, kann der Füllstand mit dem Ziel angehoben werden, ein schnelleres Auftauen dadurch erreichen zu können, dass ein verbesserter Wärmeübergang vom Spülbehälter auf den Wassertank bzw. auf das darin befindliche Wasser deshalb gestattet ist, weil durch den Pegelanstieg das Vorhandensein eines wärmeisolierenden Luftpolsters vermieden ist.

Zur Optimierung eines Wärmeübertrags vom Spülbehälter auf den Tank ist vorgesehen, dass der Tank unterhalb des Spülbehälters angeordnet ist. Dabei ist das unterhalb des Spülbehälters befindliche Raumvolumen durch den Tank vorzugsweise derart auszunutzen, dass eine möglichst große Übertragungsfläche zwischen Spülbehälter einerseits und der Deckenwandung des Tanks andererseits ausgebildet ist. Dies wird erfindungsgemäß dadurch begünstigt, dass die dem Spülbehälterboden zugewandte Deckenwandung zumindest abschnittsweise schräg und/oder zum Spülbehälter parallel oder zumindest im Wesentlichen parallel verlaufend ausgebildet ist. Die im Betriebsfall vom Spülbehälterboden ausgehende Wärmestrahlung kann so unter Vermeidung unnötiger Verluste großflächig vom Tank absorbiert und auf das darin gespeicherte Wasser übertragen werden. "Schräg verlaufend ausgebildet" meint hier, dass die Deckenwandung mit der zur Schwerkraftrichtung lotrechten Ebene einen Winkel bildet. Insbesondere ist die Deckenwandung nahezu über ihre gesamte Fläche in diesem Sinn schräg verlaufend angeordnet. "Zum Spülbehälter parallel oder zumindest im Wesentlichen parallel verlaufend ausgebildet" meint hier, dass die Deckenwandung zum Spülbehälterboden nahezu über ihre gesamte Fläche einen konstanten oder nahezu konstanten Abstand zum Spülbehälterboden einhält. Insbesondere folgt die Deckenwandung in dieser Weise somit zumindest weitgehend der Kontur des Spülbehälterbodens, welcher zum zentral im Spülbehälter angeordneten Sammeltopf geneigt ausgebildet ist.

Es ist in diesem Zusammenhang bevorzugt, dass die am Wärmeaustausch beteiligten Flächen, das heißt die imitierenden Flächen einerseits sowie die absorbierenden Flächen andererseits einen hohen ε-Wert aufweisen. Es ist deshalb insbsondere bevorzugt, den Spülbehälterboden tankseitig mit einer wärmestrahlung absorbierenden Schicht, insbesondere Bitumen-Schicht auszurüsten, deren ε-Wert bei > 0,9 , beispielsweise bei ca. 0,95 liegt. Der Tank besteht vorzugsweise aus einem Kunststoff, wobei ein Kunststoff mit einem ε-Wert von 0,70 bis 0,90 gewählt werden sollte.

Für eine schwingungsentkoppelte Anordnung des Tanks ist es bevorzugt, dass der Tank unter Belassung eines Spaltraums zwischen Deckenwandung und Spülbehälterboden unterhalb des Spülbehälters angeordnet ist. Etwaige von der Wärmepumpe und damit vom Tank ausgehende Vibrationen werden aufgrund dieser beabstandeten Anordnung nicht auf den Spülbehälter übertragen.

Andererseits ist es für einen optimierten Wärmeübergang sinnvoll, den Tank möglichst nahe zum Spülbehälter auszurichten, wobei der Abstand zwischen Tank und Spülbehälter möglichst nur wenige Millimeter betragen sollte. Es wird mit der Erfindung deshalb vorgeschlagen, dass der Abstand zwischen Deckenwandung und Spülbehälterboden zwischen 3 mm und 30 mm liegt, vorzugsweise zwischen 5 mm und 20 mm. Dieser Abstand wird insbesondere über die gesamte oder nahezu gesamte Fläche der Deckenwandung eingehalten. Da im Übrigen freie Konvektion zwischen Tank und Spülbehälter nicht zu vermeiden ist und auch der Bauraum innerhalb der Geschirrspülmaschine begrenzt ist, sollten möglichst kleine Abstände zwischen Spülbehälter und Tank gewählt werden.

Gemäß einem weiteren Merkmal der Erfindung ist vorgesehen, dass der Tank ein erstes und ein zweites Kompartment aufweist, wobei das erste Kompartment ein Nennvolumen und das zweite Kompartment ein Auffüllvolumen bereitstellen. Dabei können erstes und zweites Kompartment baulich voneinander getrennt sein. Alternativ bilden das erste Kompartment und das zweite Kompartment zusammen einen gemeinsamen Volumenraum aus.

Das vom ersten Kompartment des Tanks bereitgestellte Nennvolumen ist in seiner Größe so bemessen, dass es die Menge an Wasser für eine bestimmungsgemäße Verwendung der Wärmepumpeneinrichtung beherbergt. Zu Beginn eines Betriebs der Wärmepumpeneinrichtung ist das Nennvolumen vollständig mit Wasser ausgefüllt.

Im bestimmungsgemäßen Verwendungsfall der Wärmepumpeneinrichtung kann es zu einem zumindest teilweisen Einfrieren des im Tank bevorrateten Wassers kommen. Infolgedessen kommt es zu einer Ausdehnung. Um ein Bersten des Tanks infolge eines solchen Ausdehnens verhindern zu können, ist das vom Tank bereitgestellte Gesamtvolumen größer als das Nennvolumen.

Die Differenz zwischen Gesamtvolumen und Nennvolumen ist das sogenannten Auffüllvolumen. Dabei ist das Gesamtvolumen beziehungsweise das Auffüllvolumen in Relation zum Nennvolumen derart bemessen, dass selbst bei einem vollständigen Einfrieren des vom Tank gemäß Nennvolumen bevorrateten Wassers das Auffüllvolumen ausreichend ist, die infolge des Einfrierens stattfindende Ausdehnung kompensieren zu können. Mithin wird selbst bei einem vollständigen Einfrieren des sich im Tank befindlichen Wassers das vom Tank bereitgestellte Gesamtvolumen nicht vollständig ausgeschöpft.

Nach Beendigung eines Betriebs der Wärmepumpeneinrichtung wird dem Tank eine dem Auffüllvolumen entsprechende Menge an Wasser zugeführt. Im Ergebnis führt dies zu einem Pegelanstieg im Tank bis zur Benetzung der innenseitigen Oberfläche der Deckenwandung des Tanks. Und dies unabhängig davon, ob sich im Tank infolge des vorangegangenen Betriebs der Wärmepumpeneinrichtung noch Eis befindet oder nicht. Denn selbst für den Fall, dass im Tank befindliches Eis auftaut und es infolgedessen zu einer Rückführung der infolge der Eisbildung entstandenen Ausdehnung kommt, reicht die zugeführte Menge an Wasser aus, um in jedem Fall eine Benetzung der innenseitigen Deckenwandung sicherzustellen, denn bilden Nennvolumen und Auffüllvolumen in Summe das vom Tank bereitgestellte Gesamtvolumen aus.

Das vom Tank bereitgestellte Auffüllvolumen sorgt indes nicht nur für einen Berstschutz im Falle der Eisbildung, es stellt auch während des Betriebs der Wärmepumpeneinrichtung ein wärmeisolierendes Luftpolster zwischen der Oberfläche des vom Tank bevorrateten Wassers einerseits und der Innenseite der Deckenwandung andererseits bereit. Dadurch ist ein ungewollter Wärmeübertrag vom Spülbehälter auf das im Tank bevorratet Wasser während eines Betriebs der Wärmepumpeneinrichtung minimiert. Erst wenn der Betrieb der Wärmepumpeneinrichtung bestimmungsgemäß beendet und für ein Auftauen des sich im Tank befindlichen Eises ein Wärmeübertrag vom Spülbehälter auf den Tank erwünscht ist, erfolgt zum Austreiben des Luftpolsters eine Tankbefüllung mit Wasser.

Gemäß einem weiteren Merkmal der Erfindung ist ein Vorratsbehälter vorgesehen, der mit dem Tank in strömungstechnischer Verbindung steht, wobei der Vorratsbehälter ein Vorratsvolumen bereitstellt. Dabei kann das Vorratsvolumen vorzugsweise derart bemessen sein, dass es gleich oder größer dem Auffüllvolumen ist.

Nach einer Beendigung eines Betriebs der Wärmepumpeneinrichtung ist dem Tank Wasser in einer Menge zuzuführen, die dem Auffüllvolumen entspricht. Sofern sich im Tank Eis befindet, was nach einem Betrieb der Wärmepumpeneinrichtung regelmäßig der Fall ist, reicht das im Tank befindliche Restvolumen nicht aus, um diese Menge an Wasser aufnehmen zu können. Erfindungsgemäß ist deshalb der an dem Tank strömungstechnisch angeschlossene Vorratsbehälter vorgesehen. Dieser dient dem Tank als Ausgleichsbehälter. Sobald nämlich dem Tank Wasser in einer Menge in Entsprechung des Auffüllvolumens zugeführt wird, kommt es zur Auffüllung des sich im Tank befindlichen Restvolumens. Der Tank ist alsdann vollständig befüllt. Die Differenz zwischen Auffüllvolumen und Restvolumen wird im Vorratsbehälter zwischengespeichert. Infolge eines Abtauens des sich im Tank befindlichen Eises kommt es zu einer Rückbildung der zuvor infolge der Eisbildung entstandenen Ausdehnung, so dass das im Vorratsbehälter zwischengespeicherte Wasser in den Tank nachströmt. Sobald das im Tank befindliche Eis komplett aufgetaut ist, ist auch das im Vorratsbehälter zwischengespeicherte Wasser vollständig in den Tank überführt, so dass dieser nunmehr vollständig ausschließlich mit Wasser befüllt ist, und zwar mit einem solchen Pegelstand, dass Nennvolumen und Auffüllvolumen vollständig aufgefüllt sind, mithin die innenseitige Oberfläche der Deckenwandung benetzt ist. Ein sich zuvor im Tank befindliches Luftpolster ist damit vollständig ausgetrieben beziehungsweise verdrängt.

Gemäß einem weiteren Merkmal der Erfindung ist der Vorratsbehälter vorzugsweise oberhalb des Tanks angeordnet ist. Dies hat den Vorteil, dass im Vorratsbehälter zwischengespeichertes Wasser der Schwerkraft folgend in den Tank nachströmen kann. Zusätzlicher Mittel, insbesondere Pumpen zur Überführung von Wasser aus dem Vorratsbehälter in den Tank bedarf es insofern nicht.

Es ist gemäß einem weiteren Merkmal der Erfindung vorgesehen, dass der Tank unter strömungstechnischer Zwischenschaltung des Vorratsbehälters an die Frischwassereinlaufeinrichtung strömungstechnisch angeschlossen ist.

Bei der Frischwassereinlaufeinrichtung kann es sich um einen Frischwasseranschluss, eine geräteseitige Wassertasche oder einen sonstigen Zwischenbehälter handeln. Entscheidend ist, dass im Bedarfsfall über die Frischwassereinlaufeinrichtung dem Wassertank Frischwasser zugeführt wird, und zwar unter Zwischenschaltung des Vorratsbehälters. Das Frischwasser strömt mithin zunächst in den Vorratsbehälter ein, füllt dort das Vorratsvolumen gegebenenfalls zumindest teilweise aus und gelangt dann über eine entsprechende strömungstechnische Verbindung in den Wassertank. Die Befüllung einer im Gerät vorhandenen Wassertasche mit Enthärtungseinrichtung hat den Vorteil, dass typischerweise über einen Flügelradzähler zur Sensierung der eingelassenen Wassermenge aufweist. Somit kann in einfacher Weise und ohne zusätzliche Sensoren der Wassertank bedarfsgerecht befüllt werden.

Aus Gründen der vereinfachten Konstruktion ist es indes bevorzugt, wenn der Tank und der Vorratsbehälter einstückig ausgebildet sind, mithin ein Wasserbevorratungsbehältnis gemeinschaftlich ausbilden. Alternativ bilden der Tank und der Vorratsbehälter zwei voneinander getrennte Bauteile, die beispielsweise über eine Schlauchverbindung in strömungstechnischer Verbindung stehen.

Es ist bevorzugt, dass der Vorratsbehälter zumindest teilweise oder vollständig dem Spülbehälter seitlich nebengeordnet ist. Eine solche Ausgestaltung ist aus mehreren Gründen vor Vorteil. Zum einen steht der unterhalb des Vorratsbehälters befindliche Bauraum ausschließlich dem Tank zur Verfügung. Zum anderen ist die insgesamt zur Verfügung stehende Fläche zur Aufnahme der vom Spülbehälter ausgehenden Wärmestrahlung vergrößert. Denn die Wärmestrahlung gilt es aufzunehmen, um das im Tank befindliche Wasser nach der Beendigung eines Betriebs der Wärmepumpeneinrichtung aufzuwärmen beziehungsweise aufzutauen. Zu diesem Zeitpunkt befindet sich gegebenenfalls im Vorratsbehälter zwischengespeichertes Wasser, das erst in den Tank nachströmen kann, wenn es zum Auftauen von sich im Tank befindlichen Eis gekommen ist. Aufgrund der Nebenordnung des Vorratsbehälters zum Spülbehälter kann die seitlich vom Spülbehälter abgegebene Wärmestrahlung vom Vorratsbehälter aufgenommen und an das dort zwischengespeicherte Wasser übertragen werden. In den Tank kann mithin im Vorratsbehälter bereits vorgewärmtes Wasser nachströmen. Der Auftauvorgang wird hierdurch positiv beeinflusst.

Gemäß einem weiteren Merkmal der Erfindung ist vorgesehen, dass der Tank und/oder der Vorratsbehälter an eine Entlüftung und/oder an einen Überlauf angeschlossen sind. Durch diese konstruktive Maßnahme wird sichergestellt, dass sowohl im Falle einer Entleerung als auch im Falle einer Befüllung Tank und Vorratsbehälter entlüftet werden können, was eine geräuscharme Aus- bzw. Einströmung gestattet. Der Überlauf stellt zudem sicher, dass es nicht zu einer ungewollten Überfüllung des Tanks bzw. des Vorratsbehälters kommen kann.

Die Tankentlüftung mündet bevorzugterweise in den Vorratsbehälter. Dies erbringt einen einfachen konstruktiven Aufbau, insbesondere bei einer einstückigen Ausgestaltung von Tank und Vorratsbehälter.

Mit Vorteil ist desweiteren vorgesehen, dass die Tankentlüftung am in Höhenrichtung höchsten Punkt der schrägverlaufenden Deckenwandung des Tanks ausgebildet ist. Damit ist nicht nur sichergestellt, dass im Entlüftungsfall eine vollständige Entlüftung des Tanks stattfinden kann, es ist insbesondere auch sichergestellt, dass es bei einer Befüllung des Tanks mit Wasser zu einer vollflächigen Benetzung der innenseitigen Oberfläche der Deckenwandung des Tanks kommt. Damit ist bei einer vollständigen Befüllung des Tanks mit Wasser die Ausbildung eines auch noch so kleinen unerwünschten Luftpolsters in wirkungsvoller Weise verhindert.

Der Tank bzw. der Vorratsbehälter sind dem Spülbehälter möglichst nahe nebengeordnet, so dass ein maximierter Wärmeübergang vom Spülbehälter auf den Tank bzw. das davon bevorratete Wasser stattfinden kann. Eine direkte Anbindung des Tanks bzw. des Vorratsbehälters an den Spülbehälter ist allerdings zur Vermeidung von Vibrationsübertragungen zu vermeiden. Die erfindungsgemäße Ausgestaltung erlaubt es insofern, in Abkehr insbesondere zur Lehre nach der EP 2 193 741 A2 eine Vibrationsentkopplung von Spülbehälter und Wassertank vorzusehen, was bei der aus dem Stand der Technik bekannten Konstruktion aufgrund der Zwischenordnung des Kopplungstanks nicht möglich ist.

Gemäß einem weiteren Merkmal der Erfindung ist vorgesehen, dass in die strömungstechnische Verbindung zwischen dem Spülbehälter und dem Tank eine Pumpe und/oder ein Ablassventil integriert ist/sind.

Zu Beginn eines Spülprogramms ist zunächst das sich im Tank über das Nennvolumen hinaus befindliche Wasser dem Tank zu entnehmen und dem Spülbehälter zuzuführen. Zu diesem Zweck ist gemäß einer ersten Ausführungsform eine Pumpe vorgesehen. Zur Ausbildung einer möglichst einfachen Konstruktion ist der Tankauslass zur Wasserüberführung in den Spülbehälter in Höhenrichtung derart ausgelegt, dass sich das Nennvolumen einstellt, sobald der Pegelstand den Wasserauslass erreicht hat. Im Falle einer Pumpe wird durch diese dann Luft angesaugt.

Alternativ zur Pumpe kann ein Ablassventil vorgesehen sein. In diesem Fall ist der Tank in Höhenrichtung dem Spülbehälter beziehungsweise einem Sammeltopf, in den der Spülbehälter strömungstechnisch einmündet, derart nebengeordnet, dass das Wasser allein aufgrund der herrschenden Schwerkraft über den Wasserauslass aus dem Tank abströmt, bis der Pegelstand die Höhe der Auslassöffnung erreicht hat.

Gemäß einer besonderen Ausführungsform ist vorgesehen, dass der Tank eine Grundplatte und eine davon getragene und die Deckenwandung bereitstellende Haube aufweist. Dabei sind Grundplatte und Haube wasserdicht miteinander verbunden und schließen zusammen den vom Tank bereitgestellten Volumenraum ein.

Innerhalb der Haube kann eine ebenfalls von der Grundplatte getragene Ringwandung vorgesehen sein, die das vom Tank bereitgestellte Nennvolumen umgibt. Vorzugsweise ist bei dieser Ausführung die Ringwandung unter Belassung eines umlaufenden Ringspalts zur Haube beabstandet angeordnet.

Diese Konstruktion erbringt den Vorteil, dass im Bedarfsfall ein Luftpolster geschaffen werden kann, das sich nicht nur oberseitig des Nennvolumens ausbildet, sondern dieses auch ringförmig umgibt. Damit wird im Bedarfsfall eine verbesserte Wärmeisolation gegenüber dem Spülbehälter erreicht. Um das Luftpolster im Bedarfsfall auszutreiben, ist der gesamte von der Haube umschlossene Volumenraum mit Wasser zu fluten, mithin auch der zwischen Ringwandung und Haube ausgebildete Ringspalt.

Mit der Erfindung wird desweiteren vorgeschlagen ein Verfahren zum Betrieb einer Geschirrspülmaschine der vorbeschriebenen Art, beim dem mit Beginn eines Spülprogramms im Tank über das Nennvolumen hinaus befindliches Wasser dem Spülbehälter zugeführt und bei dem nach Beendigung eines Betriebs der Wärmepumpeneinrichtung dem Tank eine dem Auffüllvolumen entsprechende Menge an Wasser zugeführt wird.

Gemäß der erfindungsgemäßen Verfahrensdurchführung ist vorgesehen, dass zunächst mit Beginn eines Spülprogramms der Pegelstand im Tank auf das Nennvolumen eingestellt wird, zu welchem Zweck überzähliges Wasser aus dem Tank in den Spülraum abgeführt wird. Durch diesen Verfahrensschritt wird zu Beginn eines Spülprogramms sichergestellt, dass sich die für einen ordnungsgemäßen Betrieb der Wärmepumpeneinrichtung erforderliche Menge an Wasser im Wassertank befindet. Diese ist unter anderem so bemessen, dass es infolge von Eisbildung während eines Wärmepumpenbetriebs nicht zu einer vollständigen Ausfüllung des vom Tank insgesamt bereitgestellten Volumenraums kommt.

Sobald ein in an sich aus dem Stand der Technik bekannter Betrieb der Wärmepumpeneinrichtung beendet und infolge dessen das im Tank befindliche Wasser zumindest teilweise eingefroren ist, wird gemäß einem zweiten Verfahrensschritt dem Tank Frischwasser zugeführt, und zwar in einer Menge, die dem Auffüllvolumen entspricht. Im Ergebnis dieses Verfahrensschritts ist der Tank der Wärmepumpeneinrichtung vollständig mit Wasser befüllt, sodass die Ausbildung eines Luftpolsters zwischen der Innenseiten der Deckenwandung der Wasseroberfläche vermieden ist. Vom Spülbehälter abgegebene Wärmestrahlung kann so direkt, das heißt ohne Zwischenschaltung eines wärmeisolierenden Luftpolsters zum vom Tank bevorrateten Wasser gelangen, wodurch es zu einem Wärmeeintrag mit dem positiven Effekt kommt, dass ein schnelleres als aus dem Stand der Technik bekanntes Auftauen erreicht ist.

Sofern sich innerhalb des Tank Eis befindet, ist die Menge an zuzuführendem Wasser größer als das im Tank befindliche Restvolumen. Dieser Überschuss an Wasser wird in dem strömungstechnisch mit dem Tank gekoppelten Vorratsbehälter zwischengespeichert. Aus dem Vorratsbehälter strömt Wasser in Entsprechung des Fortschritts des Auftauens von im Tank befindlichem Eis nach, so dass der Vorratsbehälter dann vollständig entleert ist, wenn sich im Tank nach einem Auftauen kein Wasser mehr befindet. Da die Menge an nachgeführtem Wasser Füllvolumen entspricht, ist der Tank nach abgeschlossenem Auftauvorgang vollständig mit Wasser befüllt.

Verfahrensseitig ist mithin vorgesehen, dass mit Beginn eines Spülprogramms ein Luftpolster zwischen der Oberfläche des im Tank befindlichen Wassers und der innenseitigen Oberfläche der Deckenwandung des Tanks ausgebildet wird. Die Ausbildung dieses Luftpolsters wird dadurch erreicht, das mit Beginn eines Spülprogramms im Tank über das Nennvolumen hinaus befindliches Wasser dem Spülbehälter zugeführt wird. Zu Beginn eines Spülprogramms ist die Ausbildung eines solchen Luftpolsters erwünscht, da es zunächst die Spülflotte beziehungsweise den Spülbehälter aufzuheizen gilt, so dass eine Wärmeabgabe vom Spülbehälter auf den Tank beziehungsweise auf das darin befindliche Wasser weitestgehend zu vermeiden ist. Das wärmeisolierende Luftpolster sorgt mithin für eine Minimierung einer unerwünschten Wärmeübertragung.

Verfahrensseitig kann gemäß einem weiteren Merkmal vorgesehen sein, dass nach Beendigung des Betriebs der Wärmepumpeneinrichtung ein zwischen der Oberfläche des im Tank befindlichen Wassers und der innenseitigen Oberfläche der Deckenwandung des Tanks befindliches Luftpolster infolge der Wasserzuführung verdrängt wird. Zu diesem Zeitpunkt des Spülprogramms ist das im Tank befindliche Wasser unter Umständen eingefroren, wobei es angestrebt ist, die Wärmepumpeneinrichtung durch Auftauen des Eises möglichst zeitnah wieder in Einsatzbereitschaft versetzen zu können. Für ein Auftauen des Eises ist ein im Tank befindliches Luftpolster hinderlich, da ein Wärmeübertrag vom Spülbehälter auf den Tank nachteilig beeinflusst ist. Verfahrensseitig ist deshalb vorgesehen, den Tank in schon vorbeschriebener Weise mit Wasser aufzufüllen, so dass das Luftpolster zwischen Wasseroberfläche und Innenseite der Deckenwandung ausgetrieben wird. Es kann dann ein optimierter Wärmeübertrag vom Spülbehälter auf das sich im Tank befindliche Wasser stattfinden.

Nach einer Eisbildung befindet sich im Tank ein noch nicht genutztes Restvolumen.

Dieses fällt typischerweise geringer als das Auffüllvolumen, das heißt die Menge an nachzuführendem Wasser aus. Aus diesem Grunde ist der schon vorbeschriebene Vorratsbehälter vorgesehen, so dass verfahrensseitig das vom Vorratsbehälter bereitgestellte Vorratsvolumen als Ausgleichsvolumen für den Tank dient. In den Tank nachzuführendes Wasser kann insbesondere im Vorratsbehälter zwischengespeichert werden, bis es zu einem vollständigen Auftauen von im Tank befindlichem Eis gekommen ist.

Weitere Merkmale und Vorteile der Erfindung ergeben sich aus der nachfolgenden Beschreibung anhand der Figuren. Dabei zeigen
- Fig. 1: in schematischer Darstellung eine erfindungsgemäße Geschirrspülmaschine;
- Fig. 2a: in schematischer Ansicht von vorne die erfindungsgemäße Geschirrspülmaschine gemäß einem ersten Betriebszustand;
- Fig. 2b: in schematischer Seitenansicht die Geschirrspülmaschine nach Fig. 2a;
- Fig. 3a: in schematischer Ansicht von vorne die erfindungsgemäße Geschirrspülmaschine gemäß einem zweiten Betriebszustand;
- Fig. 3b: in schematischer Seitenansicht die Geschirrspülmaschine nach Fig. 3a;
- Fig. 4a: in schematischer Ansicht von vorne die erfindungsgemäße Geschirrspülmaschine gemäß einem dritten Betriebszustand;
- Fig. 4b: in schematischer Seitenansicht die Geschirrspülmaschine nach Fig. 4a;
- Fig. 5a: in schematischer Ansicht von vorne die erfindungsgemäße Geschirrspülmaschine gemäß einem vierten Betriebszustand;
- Fig. 5b: in schematischer Seitenansicht die Geschirrspülmaschine nach Fig. 5a;
- Fig. 6a: in schematischer Ansicht von vorne die erfindungsgemäße Geschirrspülmaschine gemäß einem fünften Betriebszustand;
- Fig. 6b: in schematischer Seitenansicht die Geschirrspülmaschine nach Fig. 6a;
- Fig. 7: in einer schematischen Darstellung die vom Tank und dem Vorratsbehälter bereitgestellten Volumina;
- Fig. 8: in einer schematischen Ansicht die erfindungsgemäße Geschirrspülmaschine gemäß einer zweiten Ausführungsform;
- Fig. 9: in einer schematischen Ansicht die erfindungsgemäße Geschirrspülmaschine gemäß einer dritten Ausführungsform;
- Fig. 10: in einer schematischen Ansicht die erfindungsgemäße Geschirrspülmaschine gemäß einer vierten Ausführungsform;
- Fig. 11: in einer schematischen Ansicht die erfindungsgemäße Geschirrspülmaschine gemäß einer fünften Ausführungsform; und
- Fig. 12: in einer schematischen Ansicht die erfindungsgemäße Geschirrspülmaschine gemäß einer sechsten Ausführungsform.

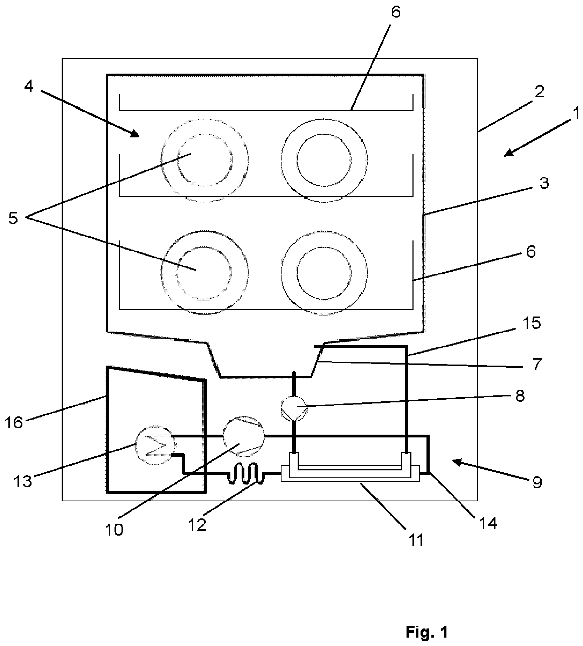

Fig. 1 lässt in rein schematischer Darstellung eine Geschirrspülmaschine 1 nach der Erfindung erkennen.

Die Geschirrspülmaschine 1 verfügt über ein Gehäuse 2, das unteranderem einen Spülbehälter 3 aufnimmt. Der Spülbehälter 3 stellt seinerseits einen Spülraum 4 bereit, der im bestimmungsgemäßen Verwendungsfall der Aufnahme von zu reinigendem Spülgut 5 dient.

Zur Beschickung von zu reinigendem Spülgut 5 mit Spülflotte dient eine in den Figuren nicht näher dargestellte Sprüheinrichtung, die innerhalb des Spülbehälters 3 angeordnet ist. Bevorzugterweise verfügt eine solche Sprüheinrichtung über Sprüharme, die jeweils verdrehbar innerhalb des Spülbehälters 2 angeordnet sind.

Im gezeigten Ausführungsbeispiel dienen zur Aufnahme des zu reinigenden Spülguts 5 Spülkörbe 6, wobei drei solcher Spülkörbe 6 vorgesehen sind.

Der Spülraum 4 mündet in einen im Detail nicht näher dargestellten Sammeltopf 7 des Spülbehälters 3 ein, an dem einen Umwälzpumpe 8 strömungstechnisch angeschlossen ist. Über entsprechende und in der Figur nicht näher dargestellte Versorgungsleitungen ist die in den Figuren ebenfalls nicht nachgestellte Sprüheinrichtung an die Umwälzpumpe 8 strömungstechnisch angeschlossen. Im bestimmungsgemäßen Verwendungsfall kann damit eine Beschickung der Sprüheinrichtung mit Spülflotte mittels der Umwälzpumpe 8 stattfinden.

Die Geschirrspülmaschine 1 verfügt desweiteren über eine Wärmepumpeneinrichtung 9. Diese weist einen Verdichter 10, einen Verflüssiger 11, ein Expansionsorgan in Form einer Drossel 12, einen Verdampfer 13 sowie einen diese Baukomponenten strömungstechnisch miteinander verbindenden Strömungskreislauf 14 auf, in dem ein Arbeitsmedium geführt ist.

Der Verdampfer 13 ist innerhalb eines Tanks 16 angeordnet, der mit Wasser 20 als Wärmeträgermedium befüllt ist.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 geführten Arbeitsmedium auf die Spülflotte statt. Zu diesem Zweck ist ein an die Umwälzpumpe angeschlossener Umwälzkreislauf 15 vorgesehen, der der Spülflottenumwälzung dient. Die im Betriebsfall im Verflüssiger 11 durch Verflüssigung des Arbeitsmediums freiwerdende Wärmeenergie wird mithin auf die im Umwälzkreislauf 15 umgewälzte Spülflotte vorgetragen, zu welchem Zweck ein entsprechend ausgebildeter Wärmetauscher vorgesehen ist.

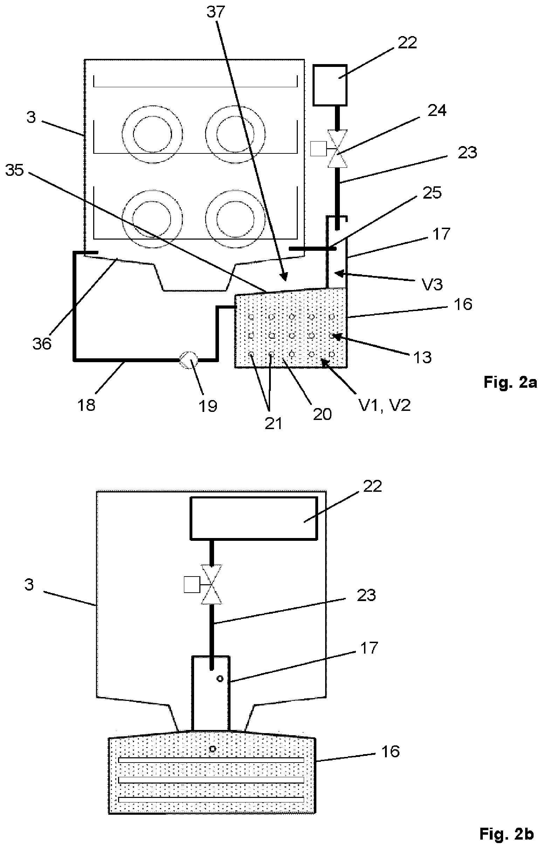

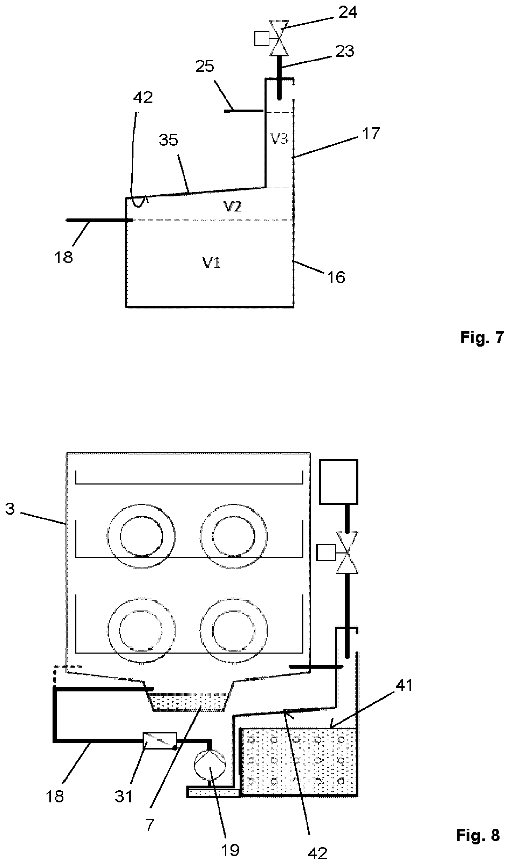

Wie sich insbesondere aus den nachfolgenden Figuren 2a bis 6b ergibt, ist der Tank 16 strömungstechnisch an den Spülbehälter 3 angeschlossen. Zu diesem Zweck ist eine Leitung 18 vorgesehen, die den Tank 16 strömungstechnisch mit dem Spülbehälter 3 verbindet. In die Leitung 18 ist eine Pumpe 19 integriert, so dass im bestimmungsgemäßen Betriebsfall im Tank 16 befindliches Wasser 20 abgepumpt und über die Leitung 18 dem Spülbehälter 3 zugeführt werden kann. Alternativ kann auch vorgesehen sein, dass die Leitung 18 in den Sammeltopf 7 einmündet, wie dies beispielsweise Fig. 8 erkennen lässt.

Der Tank 16 ist des Weiteren strömungstechnisch an eine Frischwassereinlaufeinrichtung 22 angeschlossen. Bei dieser Frischwassereinlaufeinrichtung 22 kann es sich um einen Frischwasseranschluss ans öffentliche Wassernetz oder um eine geräteseitige Wassertasche handeln, insbesondere eine Wassereinlauftasche mit integrierter Enthärtungseinrichtung. Die Frischwassereinlaufeinrichtung 22 ist mittels einer Leitung 23 strömungstechnisch an den Wassertank 16 angeschlossen, so dass im Bedarfsfall Frischwasser in den Tank 16 einströmen kann. In die Leitung 23 ist in an sich bekannter Weise ein Ventil 24 integriert, mittels welchem die Leitung 23 im Bedarfsfall geöffnet bzw. geschlossen werden kann.

Wie die Figuren 2a bis 6b des Weiteren erkennen lassen, ist ein Vorratsbehälter 17 vorgesehen, der an den Tank 16 strömungstechnisch angeschlossen ist. Im gezeigten Ausführungsbeispiel ist der Vorratsbehälter 17 zwischen Frischwassereinlaufeinrichtung 22 und Tank 16 geschaltet, so dass der Frischwassereinlauf unter Zwischenschaltung des Vorratsbehälters 17 in den Tank 16 erfolgt.

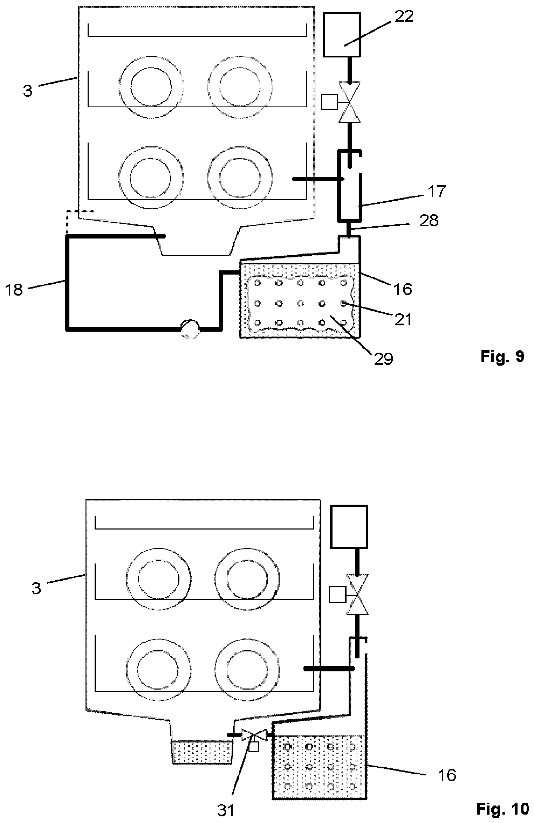

Die Figuren 2a bis 6b zeigen eine Ausführungsform der Geschirrspülmaschine 1, dergemäß der Vorratsbehälter 17 und der Tank 16 als einstückige Behältereinheit ausgebildet sind. Die Ausführungsvariante nach Fig. 9 zeigt eine Ausführungsform, dergemäß der Tank 16 und der Vorratsbehälter 17 voneinander separiert ausgebildet und über eine Anschlussleitung 28 strömungstechnisch miteinander gekoppelt sind.

Eine Ausgestaltung nach Fig. 9 kann Einbauvorteile mit sich bringen, insbesondere dann, wenn der zwischen Spülbehälter 3 und Gerätesockel befindliche Einbauraum zerklüftet ist und deshalb eine voneinander getrennte Anordnung von Vorratsbehälter 17 und Tank 16 nicht zu umgehen ist.

Wie insbesondere die schematische Darstellung nach Fig. 7 erkennen lässt, stellen der Tank 16 ein Nennvolumen V₁ und ein Auffüllvolumen V₂ bereit. In Summe ergeben das Nennvolumen V₁ und das Auffüllvolumen V₂ das vom Tank 16 insgesamt zur Verfügung gestellte Tankvolumen. Der Vorratsbehälter 17 stellt indes das Vorratsvolumen V₃ bereit. Dabei ist das Vorratsvolumen V₃ gleich oder größer dem Auffüllvolumen V₂, sodass der Vorratsbehälter 17 das insgesamt zu erwartende, durch eine Eisbildung im Tank 16 hervorgerufene Ausdehnungsvolumen aufnehmen kann.

Der Vorratsbehälter 17 ist über einen Überlauf 25 strömungstechnisch mit dem Spülbehälter 3 gekoppelt. Dabei stellt der Überlauf 25 sicher, dass es im Falle einer Einführung von Frischwasser aus der Frischwassereinlaufeinrichtung 22 nicht zu einer Überfüllung des Vorratsbehälters 17 kommt. In Höhenrichtung ist das Vorratsvolumen V₃ also durch die Einmündung des Überlaufs 25 in den Vorratsbehälter 17 bestimmt.

Die vorbeschriebene Geschirrspülmaschinenkonstruktion erlaubt die folgende Funktionsweise.

Vor Beginn eines durchzuführenden Spülprogramms besteht der in den Figuren 2a und 2b dargestellte Betriebszustand. Gemäß diesem Betriebszustand ist der Tank 16 vollständig mit Wasser 20 befüllt, d.h. das Nennvolumen V₁ und das Auffüllvolumen V₂ sind luftentleert und beherbergen ausschließlich Wasser 20. Der Vorratsbehälter 17 ist indes entleert.

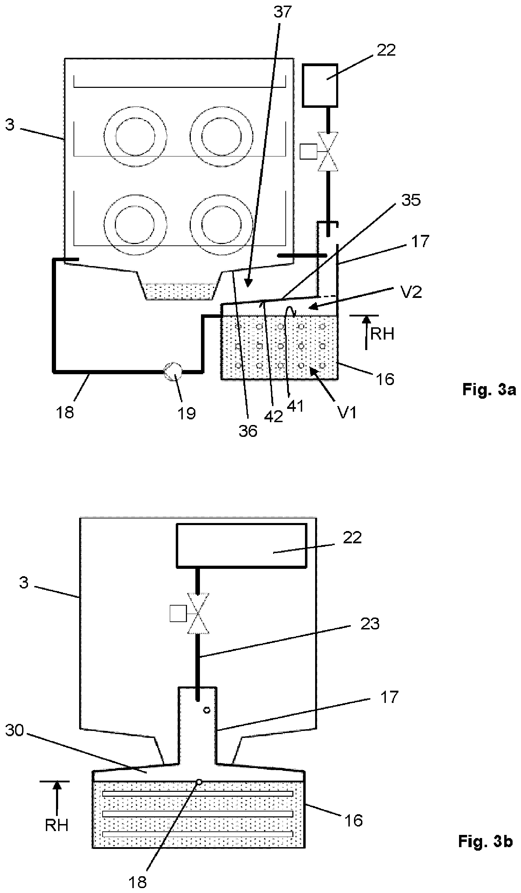

Mit Beginn eines Spülprogramms wird im Tank über das Nennvolumen V₁ hinaus befindliches Wasser 20 dem Spülbehälter 3 zugeführt. Dies zeigen die Figuren 3a und 3b. Dabei wird der Tank 16 bis zu einer Referenzhöhe RH entleert, die sich im dargestellten Ausführungsbeispiel durch die Einmündungsstelle der Leitung 18 in den Tank 16 ergibt. Gemäß diesem Betriebszustand ist das vom Tank bereitgestellte Nennvolumen V₁ vollständig mit Wasser 20 befüllt, wohingegen das Auffüllvolumen V₂ als Luftpolster 30 dient. Das Luftpolster 30 stellt eine thermisch isolierende Schicht dar, so dass im weiteren Verlauf des Spülprogramms durch einen Wärmepumpenbetrieb in die Spülflotte und den Spülbehälter 3 eingebrachte Wärmeenergie nicht ungewollt infolge von Wärmestrahlung oder auch Konvektion in das vom Tank 16 bevorratete Wasser überführt wird. Das Luftpolster 30 wirkt mithin als isolierende Schicht zwischen Spülbehälter 3 und Wasser 20.

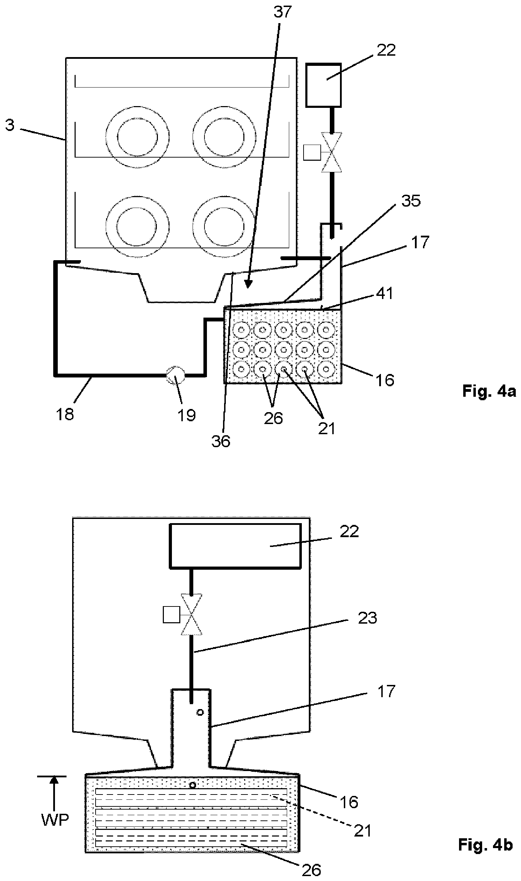

Infolge eines Betriebs der Wärmepumpeneinrichtung 9 vereisen die innerhalb des Tanks 16 angeordneten Verdampferrohre 21 des Verdampfers 13, infolge dessen sich um die Verdampferrohre 21 Eismäntel 26 bilden. Aufgrund der Eisbildung steigt der Füllstand innerhalb des Tanks 16 auf einen Wasserpegel WP, wie dies in den Figuren 4a und 4b dargestellt ist. Ein Teil des Auffüllvolumens V₂ dient als Ausgleichsvolumen, so dass der Pegelanstieg aufgrund der Eisbildung nicht zu einem Bersten des Tanks 16 führt. Dabei ist das Auffüllvolumen V₂ hinsichtlich seiner Größe so bemessen, dass ein vollständige Einfrieren des im Tank 16 befindlichen Wasser gestattet ist, ohne dass das Auffüllvolumen V₂ vollständig infolge des Pegelanstiegs ausgefüllt wäre. Der Tank 16 ist hinsichtlich seiner geometrischen Ausgestaltung mithin so konstruiert, dass das Auffüllvolumen V₂ ausreicht, um das beim Einfrieren entstehende Eis aufzunehmen, und zwar vorzugsweise so, dass das Eis nicht bis an die Deckenwandung reicht. Für eine optimierte Entlüftung während eines Befüllvorgangs des Tanks 16 mit einer zum Auffüllvolumen V₂ äquivalenten Wassermenge, ist die Deckenwandung geneigt ausgerichtet, und zwar vorzugsweise zumindest teilweise parallel verlaufend zum Spülbehälterboden 36.

Die beim Aufheizen der Geschirrspülmaschine 1 entstehende Eismasse kann aufgrund unterschiedlicher Beladungen der Geschirrspülmaschine 1 variieren. Somit variiert auch der sich einstellende Wasserpegel WP. Bei maximaler Vereisung reicht der Wasserpegel WP beziehungsweise die Eisschicht im Tank 16 vorzugsweise nicht bis an die Innenoberfläche 42 der Deckenwandung 35.

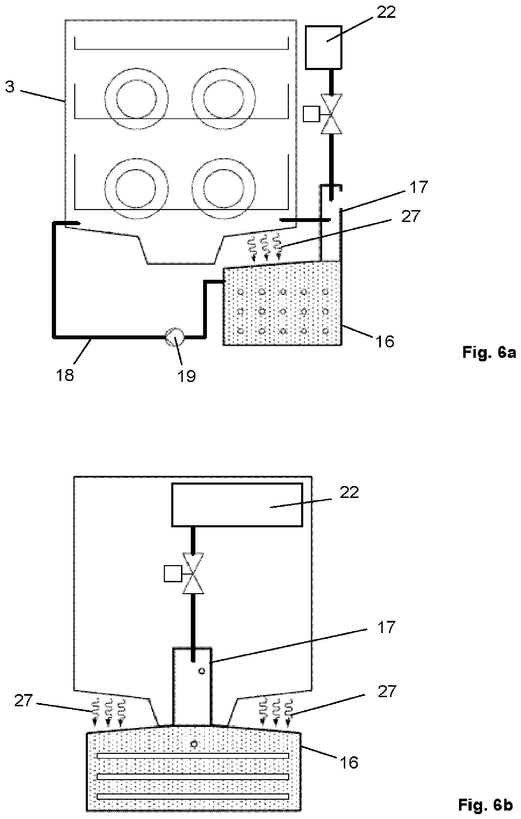

Nach Beendigung des Betriebs der Wärmepumpeneinrichtung 9 wird dem Tank unter Zwischenschaltung des Vorratsbehälters 17 Frischwasser aus der Frischwassereinlaufeinrichtung 22 zugeführt, und zwar in einer Menge, die dem Auffüllvolumen V₂ entspricht. Die Zuführung dieser Menge an Wasser stellt sicher, dass der Tank 16 nach einem vollständigen Auftauen des sich dort befindlichen Eises vollständig mit Wasser befüllt ist, wie dies die Figuren 6a und 6b zeigen.

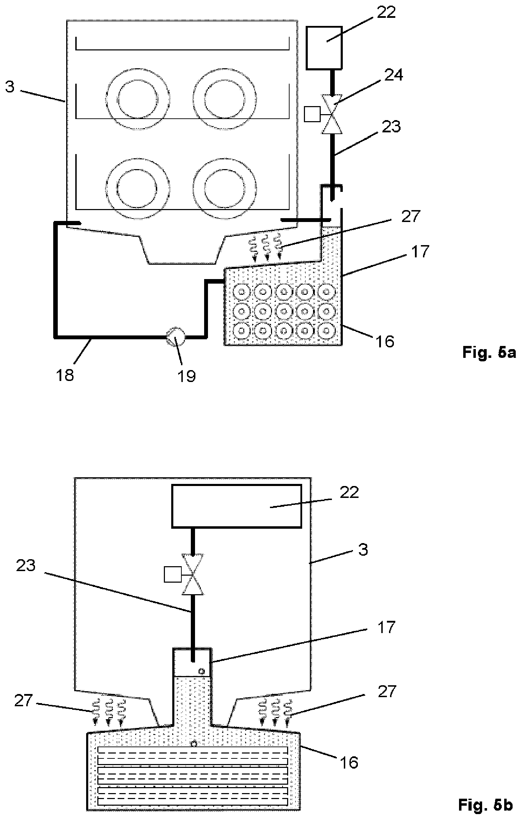

Da vor einem vollständigen Auftauen des sich im Tank 16 befindlichen Eises das im Tank zur Verfügung stehende Restvolumen geringer ausfällt als das Auffüllvolumen V₂, erfolgt bei einer Zuführung von Wasser in einer Menge des Auffüllvolumen V₂ auch eine zumindest Teilbefüllung des Vorratsbehälters 17, der insofern als Zwischenspeicher für den Tank 16 dient, wie dies die Figuren 5a und 5b erkennen lassen.

Die erfindungsgemäße Verfahrensdurchführung sieht also vor, dass nach einer Beendigung eines Betriebs der Wärmepumpeneinrichtung dem Tank16 wieder so viel Wasser zuzuführen ist, dass nach einem Auftauen des sich im Tank 16 befindlichen Eises der Tank 16 wieder vollständig mit Wasser befüllt ist. Diese Menge an zuzuführendem Wasser entspricht dem Auffüllvolumen V₂. Da aufgrund des sich im Tank 16 noch befindlichen Eises das im Tank 16 noch vorhandene freie Volumen nicht ausreicht, um diese Menge an Wasser aufzunehmen, erfolgt eine Zwischenspeicherung des dem Tank 16 zuzuführenden Wassers im Vorratsbehälter 17.

Da der Vorratsbehälter 17 bevorzugterweise dem Spülbehälter seitlich nebengeordnet ist, kann ein Wärmeübertrag vom Spülbehälter nicht nur auf das im Tank 16 befindliche Wasser 20, sondern auch auf das im Vorratsbehälter 17 zwischengespeicherte Wasser stattfinden. Dieser bringt den Vorteil, dass bereits vorgewärmtes Wasser aus dem Behälter 17 in den Tank 16 nachströmt. Dabei strömt aus dem Vorratsbehälter 17 in Entsprechung des Auftauprozesses Wasser nach, bis der Zustand in Entsprechung der Figuren 6a und 6b erreicht ist.

Im Laufe des weiteren Spülprogramms wird aufgrund der vorangegangenen Aufheizung von Spülflotte, Spülbehälter 3 und Spülgut 5 Wärmestrahlung 27 abgegeben, und zwar auch in Richtung des Tanks 16. Da durch die vollständige Auffüllung sämtlicher Volumina mit Wasser kein Luftpolster 30 mehr vorhanden ist, kann die Wärmestrahlung 27 ohne Zwischenschaltung einer thermisch isolierenden Schicht direkt auf den Tank 16 und das davon bevorratete Wasser 20 einwirken. Infolge dessen findet eine Maximierung der Wärmeübertragung vom Spülbehälter 3 auf den Tank 16 statt, so dass ein schnelles Auftauen des sich im Tank 16 befindlichen Eises stattfindet. Dieser Sachverhalt ist in den Figuren 5a und 5b dargestellt.

Infolge eines Abschmelzens der Eismantel 26 sinkt der Wasserpegel wieder. Und zwar auf ein solches Maß, dass das im Vorratsbehälter V₃ bevorratete Wasser vollständig zur Auffüllung des Auffüllvolumens V₂ aus dem Vorratsbehälter 17 in den Tank 16 überführt werden kann. Im Ergebnis stellt sich die in den Figuren 6a bis 6b gezeigte Situation ein, dergemäß der Tank 16 vollständig mit Wasser befüllt ist, wohingegen der Vorratsbehälter 17 entleert ist. Das Spülprogramm kann nun beendet werden, so dass ein neues Spülprogramm mit diesem Betriebszustand startet, wie schon einleitend bezüglich der Figuren 2a und 2b beschrieben.

Die Bevorratung des im Tank 16 befindlichen Wassers bis zum Start eines nächsten Spülprogramms erbringt den Vorteil, dass das nachgefüllte Wasser zwecks Vermeidung eines Luftpolsters 30 nicht verloren, sondern als Anfangswassermenge in einem nachfolgenden Spülprogramm wiederverwendet werden kann. Alternativ hierzu kann vorgesehen sein, mit Beendigung eines Spülprogramms den Tank 16 wieder so weit zu entleeren, dass nur das vom Tank 16 bereitgestellte Nennvolumen V₁ mit Wasser befüllt ist. Zu bevorzugen ist indes, den Tank 16 bis zum Start eines nächsten Spülprogramms vollends mit Wasser befüllt zu lassen, da die Bevorratung auch des Auffüllvolumens V₂ bis zum nächsten Spülprogramm den Vorteil bietet, dass auch bei ausgeschalteter Maschine eine Wärmerückgewinnung beziehungsweise Tankregeneration auch über das Ende eines Spülprogramms hinaus möglich ist. Denn das Auftauen dauert sehr viel länger als das Spülprogramm, weshalb es die bevorzugte Variante ist, eine der Menge an zugeführtem beziehungsweise zuzuführendem Wasser entsprechende Menge nicht mit Beendigung eines Spülprogramms zu verwerfen, so dass auch noch nach einem Programmende auf den Tank 16 mehr Energie aus dem Spülraum und insbesondere aus der Beladung übertragen werden kann, als dies bei Ausbildung eines Luftpolsters infolge einer Wasserabführung möglich wäre.

Um einen möglichst effektiven Wärmeübergang zu gewährleisten, ist der Tank 16 dem Spülbehälter 3 möglichst nahe nebengeordnet. Dabei bilden Tank und Spülbehälter einen Spaltraum 37 zwischen sich aus, womit insbesondere eine Vibrationsentkopplung erreicht ist.

Fig. 8 lässt eine alternative Ausführungsform der erfindungsgemäßen Geschirrspülmaschine erkennen. Im Unterschied zur vorerläuterten Konstruktion ist gemäß dieser Ausführungsform ein Tank 16 mit angesteckter Pumpe 19 und zusätzlichem Rückschlagventil 31 vorgesehen. Dabei ist der Tank 16 so konstruiert, dass der Bereich mit angesteckter Pumpe 19 nicht einfrieren kann, was im vorliegenden Fall dadurch realisiert ist, dass dem eigentlichen Tank 16 ein durch eine Barriere getrennter Ansaugbereich geschaffen ist. Alternativ zur Einmündung der Leitung 18 in den Spülbehälter 3 kann auch eine Einmündung der Leitung 18 in den Sammeltopf 7 vorgesehen sein.

Fig. 9 zeigt eine weitere Ausführungsform, dergemäß Vorratsbehälter 17 und Tank 16 nicht als einstückiges Behältnis, sondern separat voneinander ausgebildet sind. Zur strömungstechnischen Verbindung von Tank 16 und Vorratsbehälter 17 dient eine Anschlussleitung 28.

Fig. 9 lässt des Weiteren rein exemplarisch einen möglichen größeren Eisklotz 29 erkennen. Denn die separate Ausgestaltung von Tank 16 und Vorratsbehälter 17 kann insbesondere bei großen Ausdehnungsvolumen von Vorteil sein.

Fig. 10 zeigt eine weitere Ausführungsform mit einem Ablassventil 31 anstatt einer Pumpe 19. Gemäß dieser Konstruktion sind der Tank 16 und der Sammeltopf 17 derart nebeneinander angeordnet, dass ein Entleeren des Tanks 16 auf Referenzhöhe RH allein durch Schwerkraft erfolgen kann. Um ein Verschmutzen des Tanks 16 bei Rückfluss aus dem Sammeltopf 7 zu verhindern, ist das Ventil 31 vorzugsweise derart ausgestaltet, dass es nur unter hydrostatischem Vordruck aus dem Tank 16 und Vorratsbehälter 17 öffnen kann. Bei Gegendruck aus dem Sammeltopf 7 bleibt es verschlossen. Dies stellt sicher, dass bei defekter Laugenpumpe keine Spülflotte aus dem Sammeltopf 7 in den Tank 16 gelangen kann.

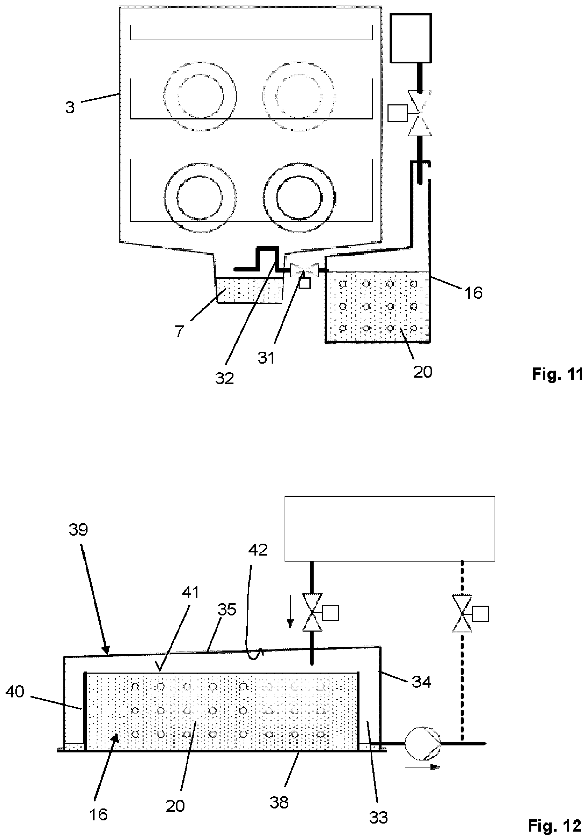

Fig. 11 zeigt schematisch eine weitere Ausführungsform, dergemäß ein dem Ventil 31 nachgeschalteter Saugheber 32 vorgesehen ist. Somit können Ablagerungen und Rückstau von Spülflottenresten vermieden werden.

Damit das Auslaufen des Auffüllvolumens V₂ aus dem Tank 16 über Schwerkraft in den Sammeltopf 7 funktioniert, muss der Sammeltopf 7 unterhalb seiner Anschlussleitung mindestens das Auffüllvolumen V₂ aufnehmen können. Andernfalls würde der Tank 16 nicht auf Referenzhöhe entleert werden. Eine Verschmutzung durch Rückstände im Sammeltopf 7 wäre dann möglich.

Fig. 12 zeigt in einer schematischen Darstellung eine weitere Ausführungsform, dergemäß eine Tankvariante mit mehreren Wärmeübertragungsflächen vorgesehen ist. Der Tank 16 verfügt über eine Grundplatte 38. Diese trägt wasserdicht damit verbunden eine Haube 29, die die Deckenwandung 35 sowie eine umlaufende Wand 34 umfasst.

Innerhalb der Haube 39 ist eine umlaufende Ringwandung 40 angeordnet, und zwar unter Belassung eines Ringspalts 33 zur Wand 34 der Haube 39 beabstandet.

Die vorbeschriebene Konstruktion gestattet es, im Bedarfsfall nicht nur ein Luftpolster zwischen der Wasseroberfläche 41 und der Innenoberfläche 42 der Deckenwandung 35 auszubilden, sondern auch ein umlaufendes Luftpolster, welches durch den Ringspalt 33 definiert ist.

Der umlaufende Ringspalt 33 kann zwischen 3 mm und 10 mm, bevorzugterweise zwischen 5 mm und 8 mm groß sein. Der Tank 16 wird beispielsweise von oben durch eine Wassertasche befüllt, indem der Stutzen des Wasserzulaufs am Tank in der Wanne mündet. Selbstverständlich kann der Anschluss auch seitlich oder von unten erfolgen. Die Entleerung des Tanks 16 kann durch ein oder mehrere Ventile oder Pumpen erfolgen. Diese Entleerungsmittel kennzeichnen sich dadurch, dass sie in Bodennähe aus dem Ringspalt nach außen münden. Somit bilden die hochstehenden inneren Wände den eigentlichen Tank 16 und zugleich durch ihre Höhe das Speichervolumen V₁.

Um das Speichervolumen V₁ restlos entleeren zu können, kann ein in den Figuren 1 bis 12 nicht gesondert dargestelltes Entleerungsmittel, zum Beispiel ein Ventil oder eine Pumpe vorgesehen sein, was es ermöglicht, den Tank 16 vollständig entleeren zu können. Dies ist vorzugsweise für den Transport der Geschirrspülmaschine 1 oder für eine lange Stillstandzeit der Geschirrspülmaschine 1 vorgesehen. Die Entleerungsfunktion kann entweder automatisch nach Ablauf einer vorgegebenen Zeitdauer oder manuell durch den Verwender erfolgen. Beispielsweise durch das Auswählen einer Taste oder einer Tastenkombination an der Steuerung der Geschirrspülmaschine 1.

### Bezugszeichen

- 1: Geschirrspülmaschine
- 2: Gehäuse
- 3: Spülbehälter
- 4: Spülraum
- 5: Spülgut
- 6: Spülkorb
- 7: Sammeltopf
- 8: Umwälzpumpe
- 9: Wärmepumpeneinrichtung
- 10: Verdichter
- 11: Verflüssiger
- 12: Drossel
- 13: Verdampfer
- 14: Strömungskreislauf
- 15: Umwälzkreislauf
- 16: Tank
- 17: Vorratsbehälter
- 18: Leitung
- 19: Pumpe
- 20: Wasser
- 21: Verdampferrohr
- 22: Frischwassereinlaufeinrichtung
- 23: Leitung
- 24: Ventil
- 25: Überlauf
- 26: Eismantel
- 27: Wärmestrahlung
- 28: Anschlussleitung
- 29: Eis
- 30: Luftpolster
- 31: Ablassventil
- 32: Saugheber
- 33: Ringspalt
- 34: Wand
- 35: Deckenwandung
- 36: Spülbehälterboden
- 37: Spaltraum
- 38: Grundplatte
- 39: Haube
- 40: Ringwandung
- 41: Oberfläche
- 42: Oberfläche

- V₁: Nennvolumen
- V₂: Auffüllvolumen
- V₃: Vorratsvolumen
- RH: Referenzhöhe
- WP: Wasserpegel

## Patentansprüche

1. Geschirrspülmaschine, insbesondere Haushaltsgeschirrspülmaschine, mit einem einen Spülraum (4) bereitstellenden Spülbehälter (3), der der Aufnahme von zu reinigendem Spülgut (5) dient, und einer Wärmepumpeneinrichtung (9) die einen Verdampfer (13) aufweist, der innerhalb eines mit Wasser (20) befüllten Tanks (16) angeordnet ist, wobei der Tank (16) strömungstechnisch an den Spülbehälter (3) und an eine Frischwassereinlaufeinrichtung (22) angeschlossen ist,
**dadurch gekennzeichnet,**
**dass** der Tank (16) unterhalb des Spülbehälters (3) angeordnet ist und eine dem Spülbehälterboden (36) zugewandte Deckenwandung (35) aufweist,
wobei der Füllstand des Tanks (16) mit Beginn eines Spülprogramms auf einen unteren Pegelstand eingestellt werden kann, bei dem sich zwischen der Oberfläche (41) des im Tank (16) befindlichen Wassers (20) und der innenseitigen Oberfläche (42) der Deckenwandung (35) des Tanks (16) ein Luftpolster (30) ausbildet,
und wobei der Füllstand des Tanks (16) nach Abschluss eines Betriebs der Wärmepumpeneinrichtung (9) durch Wasserzuführung angehoben werden kann, wodurch das Luftpolster (30) verdrängt wird.

2. Geschirrspülmaschine nach Anspruch 1, **dadurch gekennzeichnet, dass** die Deckenwandung (35) zumindest abschnittsweise schräg und/oder zum Spülbehälterboden (36) im Wesentlichen parallel verlaufend ausgebildet ist.

3. Geschirrspülmaschine nach einem der vorhergehenden Ansprüche, **dadurch gekennzeichnet, dass** der Tank (16) unter Belassung eines Spaltraums (37) zwischen Deckenwandung (35) und Spülbehälterboden (36) unterhalb des Spülbehälters (3) angeordnet ist, wobei der Abstand zwischen Deckenwandung (35) und Spülbehälterboden (36) zwischen 3 mm und 30 mm beträgt.

4. Geschirrspülmaschine nach einem der vorhergehenden Ansprüche, **dadurch gekennzeichnet, dass** der Tank (16) ein erstes und ein zweites Kompartment aufweist, wobei das erste Kompartment ein Nennvolumen (V₁) und das zweite Kompartment ein Auffüllvolumen (V₂) bereitstellen.

5. Geschirrspülmaschine nach Anspruch 4, **gekennzeichnet durch** einen vorzugsweise oberhalb des Tanks (16) angeordneten Vorratsbehälter (17), der mit dem Tank (16) in strömungstechnischer Verbindung steht, wobei der Vorratsbehälter (17) ein Vorratsvolumen (V₃) bereitstellt, welches Vorratsvolumen (V₃) gleich oder größer dem Auffüllvolumen (V₂) ist.

6. Geschirrspülmaschine nach Anspruch 5, **dadurch gekennzeichnet, dass** der Tank (16) unter strömungstechnischer Zwischenschaltung des Vorratsbehälters (17) an die Frischwassereinlaufeinrichtung (22) strömungstechnisch angeschlossen ist.

7. Geschirrspülmaschine nach einem vorhergehenden Ansprüche 5 bis 6, **dadurch gekennzeichnet, dass** der Vorratsbehälter (17) zumindest teilweise dem Spülbehälter (3) seitlich nebengeordnet ist.

8. Geschirrspülmaschine nach einem der vorhergehenden Ansprüche 5 bis 7, **dadurch gekennzeichnet, dass** der Tank (16) und der Vorratsbehälter (17) einstückig ausgebildet sind.

9. Geschirrspülmaschine nach einem der vorhergehenden Ansprüche 5 bis 8, **dadurch gekennzeichnet, dass** der Tank (16) und/oder der Vorratsbehälter (17) an eine Entlüftung und/oder an einen Überlauf angeschlossen sind.

10. Geschirrspülmaschine nach Anspruch 9, **dadurch gekennzeichnet, dass** die Tankentlüftung am in Höhenrichtung höchsten Punkt der insbesondere schrägverlaufenden Deckenwandung (35) des Tanks (16) ausgebildet ist.

11. Geschirrspülmaschine nach einem der vorhergehenden Ansprüche, **dadurch gekennzeichnet, dass** in die strömungstechnische Verbindung zwischen dem Spülbehälter (3) und dem Tank (16) eine Pumpe (19) und/oder ein Ablassventil (31) integriert ist,
und/oder dass die strömungstechnische Verbindung zwischen Spülbehälter (3) und Tank (16) einen Saugheber (32) aufweist.

12. Geschirrspülmaschine nach einem der vorhergehenden Ansprüche, **dadurch gekennzeichnet, dass** der Tank (16) eine Grundplatte (38) und eine davon getragene und die Deckenwandung (35) bereitstellende Haube (39) aufweist, sowie vorzugsweise eine von der Haube (39) aufgenommene und das Nennvolumen (V₁) umgebende Ringwandung (40).

13. Verfahren zum Betrieb einer Geschirrspülmaschine (1) nach einem der Ansprüche 4 bis 10, oder einem der Ansprüche 11 oder 12 in Verbindung mit dem Anspruch 4, bei dem mit Beginn eines Spülprogramms im Tank (16) über das Nennvolumen (V₁) hinaus befindliches Wasser (20) dem Spülbehälter (3) zugeführt wird und bei dem nach Beendigung eines Betriebs der Wärmepumpeneinrichtung (9) dem Tank (16) eine dem Auffüllvolumen (V₂) entsprechende Menge an Wasser zugeführt wird.

14. Verfahren nach Anspruch 13, bei dem mit Beginn eines Spülprogramms ein Luftpolster (30) zwischen der Oberfläche (41) des im Tank (16) befindlichen Wassers (20) und der innenseitigen Oberfläche (42) der Deckenwandung (35) des Tanks (16) ausgebildet wird,
und/oder bei dem nach Beendigung eines Betriebs der Wärmepumpeneinrichtung (9) ein zwischen der Oberfläche (41) des im Tank (16) befindlichen Wassers (20) und der innenseitigen Oberfläche (42) der Deckenwandung (35) des Tanks (16) befindliches Luftpolster (30) infolge der Wasserzuführung verdrängt wird.

15. Verfahren nach Anspruch 14 in Verbindung mit Anspruch 5, bei dem das vom Vorratsbehälter (17) bereitgestellte Vorratsvolumen (V₃) als Ausgleichsvolumen für den Tank (16) dient, wobei der Vorratsbehälter (17) vorzugsweise das dem Tank (16) zuzuführende Wasser zumindest teilweise zwischenspeichert.

## Claims

1. Dishwasher, in particular a household dishwasher, comprising a washing container (3) which provides a washing chamber (4) and is used to receive washware (5) to be cleaned, and a heat pump device (9) having an evaporator (13) which is arranged within a tank (16) filled with water (20), the tank (16) being in flow connection with the washing container (3) and a fresh water inlet device (22), **characterised in that** the tank (16) is arranged below the washing container (3) and has a top wall (35) facing the washing container bottom (36), it being possible to set the fill level of the tank (16) to a lower water level at the start of a washing program, at which water level an air cushion (30) is formed between the surface (41) of the water (20) in the tank (16) and the inside surface (42) of the top wall (35) of the tank (16), and it being possible to increase the fill level of the tank (16), by supplying water, once the heat pump device (9) has finished operating, as a result of which the air cushion (30) is displaced.

2. Dishwasher according to claim 1, **characterised in that** the top wall (35) is designed to extend obliquely at least in portions and/or to extend substantially in parallel with the washing container bottom (36).

3. Dishwasher according to either of the preceding claims, **characterised in that** the tank (16) is arranged below the washing container (3) with a gap (37) between the top wall (35) and the washing container bottom (36), the distance between the top wall (35) and the washing container bottom (36) being between 3 mm and 30 mm.

4. Dishwasher according to any of the preceding claims, **characterised in that** the tank (16) has a first and a second compartment, the first compartment providing a nominal volume (V₁) and the second compartment providing a fill-up volume (V₂).

5. Dishwasher according to claim 4, **characterised by** a storage container (17) which is preferably arranged above the tank (16) and is in flow connection with the tank (16), the storage container (17) providing a storage volume (V₃), which storage volume (V₃) is greater than or equal to the fill-up volume (V₂).

6. Dishwasher according to claim 5, **characterised in that** the tank (16) is in flow connection with the fresh water inlet device (22), with the storage container (17) being flow connected therebetween.

7. Dishwasher according to either of the preceding claims 5 to 6, **characterised in that** the storage container (17) is at least partially arranged laterally next to the washing container (3).

8. Dishwasher according to any of the preceding claims 5 to 7, **characterised in that** the tank (16) and the storage container (17) are formed in one piece.

9. Dishwasher according to any of the preceding claims 5 to 8, **characterised in that** the tank (16) and/or the storage container (17) are connected to a ventilation means and/or to an overflow means.

10. Dishwasher according to claim 9, **characterised in that** the tank ventilation means is formed at the highest point in the vertical direction of the in particular inclined top wall (35) of the tank (16).

11. Dishwasher according to any of the preceding claims, **characterised in that** a pump (19) and/or a discharge valve (31) is integrated in the flow connection between the washing container (3) and the tank (16), and/or **in that** the flow connection between the washing container (3) and the tank (16) includes a siphon (32).

12. Dishwasher according to any of the preceding claims, **characterised in that** the tank (16) has a base plate (38) and a hood (39) which is supported thereon and provides the top wall (35), and preferably an annular wall (40) which is received by the hood (39) and surrounds the nominal volume (V₁).

13. Method for operating a dishwasher (1) according to any of claims 4 to 10, or either claim 11 or claim 12 in conjunction with claim 4, in which, at the start of a washing program, water (20) located in the tank (16) above the nominal volume (V₁) is fed to the washing container (3), and in which, once the heat pump device (9) has finished operating, an amount of water corresponding to the fill-up volume (V₂) is fed to the tank (16).

14. Method according to claim 13, in which, at the start of a washing program, an air cushion (30) is formed between the surface (41) of the water (20) in the tank (16) and the inside surface (42) of the top wall (35) of the tank (16), and/or in which, once the heat pump device (9) has finished operating, an air cushion (30) located between the surface (41) of the water (20) in the tank (16) and the inside surface (42) of the top wall (35) of the tank (16) is displaced as a result of water being supplied.

15. Method according to claim 14 in conjunction with claim 5, in which the storage volume (V₃) provided by the storage container (17) is used as a compensating volume for the tank (16), the storage container (17) preferably temporarily storing at least some of the water to be supplied to the tank (16).

## Revendications

1. Lave-vaisselle, en particulier lave-vaisselle ménager, comportant une cuve de lavage (3) fournissant un espace de lavage (4) et servant à recevoir des articles à laver (5), et un dispositif de pompe à chaleur (9) qui présente un évaporateur (13) disposé au sein d'un réservoir (16) rempli d'eau (20), le réservoir (16) étant relié fluidiquement à la cuve de lavage (3) et à un dispositif d'entrée d'eau fraîche (22),
**caractérisé en ce**
**que** le réservoir (16) est disposé sous la cuve de lavage (3) et présente une paroi supérieure (35) faisant face au fond de cuve de lavage (36),
le niveau de remplissage du réservoir (16) pouvant être réglé à un niveau de liquide inférieur au début d'un programme de lavage dans lequel est formé un coussin d'air (30) entre la surface (41) de l'eau (20) se trouvant dans le réservoir (16) et la surface intérieure (42) de la paroi supérieure (35) du réservoir (16),
et le niveau de remplissage du réservoir (16) pouvant être augmenté en acheminant de l'eau après la fin du fonctionnement du dispositif de pompe à chaleur (9), moyennant quoi le coussin d'air (30) est déplacé.

2. Lave-vaisselle selon la revendication 1, **caractérisé en ce que** la paroi supérieure (35) est formée pour s'étendre obliquement au moins par sections et/ou pour s'étendre sensiblement parallèlement au fond de cuve de lavage (36).

3. Lave-vaisselle selon l'une des revendications précédentes, **caractérisé en ce que** le réservoir (16) est disposé sous la cuve de lavage (3) en laissant un espace (37) entre la paroi supérieure (35) et le fond de cuve de lavage (36), la distance entre la paroi supérieure (35) et le fond de cuve de lavage (36) étant comprise entre 3 mm et 30 mm.

4. Lave-vaisselle selon l'une des revendications précédentes, **caractérisé en ce que** le réservoir (16) présente un premier et un second compartiments, le premier compartiment fournissant un volume nominal (V₁) et le second compartiment fournissant un volume de remplissage (V₂).

5. Lave-vaisselle selon la revendication 4, **caractérisé par** une cuve de stockage (17) disposée de préférence au-dessus du réservoir (16) et en liaison fluidique avec le réservoir (16), la cuve de stockage (17) fournissant un volume de stockage (V₃), lequel volume de stockage (V₃) est égal ou supérieur au volume de remplissage (V₂).

6. Lave-vaisselle selon la revendication 5, **caractérisé en ce que** le réservoir (16) est relié fluidiquement au dispositif d'arrivée d'eau fraîche (22) par l'interposition fluidique de la cuve de stockage (17).

7. Lave-vaisselle selon l'une des revendications 5 à 6 précédentes, **caractérisé en ce que** la cuve de stockage (17) est au moins partiellement disposée latéralement, de façon adjacente par rapport à la cuve de lavage (3).

8. Lave-vaisselle selon l'une des revendications 5 à 7 précédentes, **caractérisé en ce que** le réservoir (16) et la cuve de stockage (17) sont formés d'une seule pièce.

9. Lave-vaisselle selon l'une des revendications 5 à 8 précédentes, **caractérisé en ce que** le réservoir (16) et/ou la cuve de stockage (17) sont reliés à une ventilation et/ou à un déversoir.

10. Lave-vaisselle selon la revendication 9, **caractérisé en ce que** la ventilation du réservoir est formée au point le plus élevé, dans la direction verticale, de la paroi supérieure (35), en particulier inclinée, du réservoir (16).

11. Lave-vaisselle selon l'une des revendications précédentes, **caractérisé en ce qu'**une pompe (19) et/ou une soupape d'évacuation (31) sont intégrées dans la liaison fluidique entre la cuve de lavage (3) et le réservoir (16),
et/ou que la liaison fluidique présente un poussoir d'aspiration (32) entre la cuve de lavage (3) et le réservoir (16).

12. Lave-vaisselle selon l'une des revendications précédentes, **caractérisé en ce que** le réservoir (16) présente une plaque de base (38) et une hotte (39) portée par celle-ci et fournissant la paroi supérieure (35), et de préférence une paroi annulaire (40) reçue par la hotte (39) et entourant le volume nominal (V₁).

13. Procédé de fonctionnement d'un lave-vaisselle (1) selon l'une des revendications 4 à 10, ou l'une des revendications 11 ou 12 en liaison avec la revendication 4, selon lequel, au début d'un programme de lavage, de l'eau (20) se trouvant dans le réservoir (16) au-delà du volume nominal (V₁) est acheminée vers la cuve de lavage (3) et selon lequel, après la fin du fonctionnement du dispositif de pompe à chaleur (9), une quantité d'eau correspondant au volume de remplissage (V₂) est acheminée vers le réservoir (16).

14. Procédé selon la revendication 13, selon lequel, au début d'un programme de lavage, un coussin d'air (30) est formé entre la surface (41) de l'eau (20) se trouvant dans le réservoir (16) et la surface intérieure (42) de la paroi supérieure (35) du réservoir (16),
et/ou selon lequel, après la fin du fonctionnement du dispositif de pompe à chaleur (9), un coussin d'air (30) se trouvant entre la surface (41) de l'eau (20) se trouvant dans le réservoir (16) et la surface intérieure (42) de la paroi supérieure (35) du réservoir (16) est déplacé en raison de l'acheminement de l'eau.

15. Procédé selon la revendication 14 en liaison avec la revendication 5, selon lequel le volume de stockage (V₃) fourni par la cuve de stockage (17) sert de volume de compensation pour le réservoir (16), la cuve de stockage (17) stockant de préférence temporairement, au moins partiellement, l'eau à acheminer au réservoir (16).
